# EUROPÄISCHE PATENTSCHRIFT

(11) **EP 1 888 395 B1**
(45) Veröffentlichungstag und Bekanntmachung des Hinweises auf die Patenterteilung: **13.07.2011**
(21) Anmeldenummer: 06742381.4
(22) Anmeldetag: 24.05.2006
(51) Int. Cl.: B62D 25/06

(54) **DACHMODUL EINES KRAFTWAGENS**
ROOF MODULE OF A MOTOR VEHICLE
MODULE DE TOIT POUR UNE AUTOMOBILE

(30) Priorität: 24.05.2005 DE 102005024464
(43) Veröffentlichungstag der Anmeldung: 20.02.2008
(73) Patentinhaber: Webasto AG, 82131 Stockdorf (DE)
(72) Erfinder: VOGT, Oliver, 80796 München (DE); SCHLEICHER, Bernhard, 80689 München (DE); RUDOLPH, Thomas, 82229 Hechendorf (DE); KOELBL, Michael, 82061 Neuried (DE); JÖHL, Anton, 83670 Bad Heilbrunn (DE); LEROY, Alain, 86911 Diessen-Dettenwang (DE); KOGLER, Rupert, 80634 München (DE); WESTWOOD, Nigel, 82139 Wettstetten (DE); KONTA, Mirko, 85080 Gaimersheim (DE)
(74) Vertreter: Wiese Konnerth Fischer Patentanwälte Partnerschaft
(86) Internationale Anmeldenummer: PCT/DE2006/000903
(87) Internationale Veröffentlichungsnummer: WO 2006/125429

(56) Entgegenhaltungen:
- EP-A- 0 563 526
- EP-A- 1 400 411
- WO-A-2004/024538
- DE-A1- 3 429 880
- DE-A1- 10 056 041
- DE-A1- 10 210 615
- DE-A1- 10 340 746
- DE-U1- 9 207 442
- US-A1- 2003 159 264

## Beschreibung

Die Erfindung betrifft ein Dachmodul eines Kraftwagens mit den Merkmalen des Oberbegriffs des Anspruchs 1 sowie einen Kraftwagen mit einem Dachmodul.

Derartige Dachmodule sind in unterschiedlichen Ausführungen grundsätzlich bekannt. So ist aus der DE 102 30 443 A1 ein Kraftwagen mit einem Dachmodul bekannt geworden, das auf eine Karosserie aufsetzbar und an dieser festlegbar ist und das eine Windschutzscheibe und einen sich anschließenden Dachbereich aufweist, wobei der Dachbereich zumindest bereichsweise aus durchsichtigem Material besteht.

Die DE 100 56 041 A1 offenbart einen Aufsatz für ein Dach eines Kraftwagens, der auf dem Dach angeordnet und daran befestigt ist und einen sich über die Dachbreite erstreckenden Behälter aufweist. Der Behälter ist in seiner Längsrichtung durch eine mittig angeordnete Aufnahmerinne in zwei seitliche Kassetten unterteilt, die sich beidseitig der Aufnahmerinne anschließen, so daß sich eine im wesentlichen U-förmige Querschnittsgeometrie des Behälters ergibt. In die Aufnahmerinne ist eine als transportables Modul ausgebildete Skibox der Länge nach einschiebbar und befestigbar, wobei die Skibox an die Form der Aufnahmerinne angepaßt ist.

Aus der DE 197 29 044 A1 ist ein Bausatz für ein Kraftfahrzeug bekannt geworden, der zur Veränderung der Nutzungsmöglichkeiten und/oder des Aussehens eines Kraftfahrzeugs mehrere wahlweise an das Kraftfahrzeug anzubringende Bauteile enthält. Die Bauteile sind jeweils als in eine Dachöffnung des Kraftfahrzeugs einzusetzende Dachabdeckung ausgebildet.

Aus der DE 34 29 880 A1 ist ein Kraftwagen mit einem gattungsgemäßen Dachmodul bekannt geworden, das in unterschiedlichen Konfigurationen wie z. B. als flächiges Volldach, mit an seiner Oberseite gebildeter Dachbox, mit einer Lagereinrichtung wie einem Skiträger oder mit einem Schiebe-Hebedach gebildet sein kann.

Die US 2003/0159264 A1 offenbart ein Dachmodul zum Festlegen an der Karosserie eines Kraftfahrzeugs, wobei das Dachmodul zumindest einen transparenten Abschnitt wie eine Windschutzscheibe oder eine Heckscheibe aufweist.

Ein aus der DE 103 40 746 A1 bekanntes Dachmodul eines Fahrzeugs enthält eine einstückig integrierte Dachbox, die sich insbesondere mittig über die Länge des Dachmoduls erstreckt.

Aufgabe der Erfindung ist es, ein eingangs genanntes Dachmodul in verbesserter Gestaltung bereitzustellen. Eine weitere Aufgabe ist es, einen Kraftwagen mit einem verbesserten Dachmodul bereitzustellen.

Die Aufgabe wird erfindungsgemäß durch ein Dachmodul mit den Merkmalen des Anspruchs 1 gelöst.

Dieses Dachmodul stellt aufgrund einfacher Herstellungsweise eine kostengünstige Lösung dar und genügt durchschnittlichen Anforderungen. Das Dachmodul kann ein Panoramadach sein, das nach oben erhaben ist und/oder zumindest teilweise transparent ist und/oder eine an seiner Oberseite fest angebrachte Dachbox aufweist oder eine Lagereinrichtung zum lösbaren Festlegen einer Dachbox an der Oberseite des Dachmoduls aufweist. Diese einzelnen oder kombinierten Gestaltungen des Dachmoduls bieten dem Nutzer bei Anbringung an seinem Fahrzeug einen höheren Gebrauchswert.

In erfindungsgemäßer Gestaltung enthält das Dachmodul eine nicht transparente Y-Struktur und die freien Enden der beiden Y-Schenkel enden dachvorderseitig an den A-Säulen oder an den seitlichen Dachlängsholmen. Diese Y-Struktur bildet eine optische Gliederung der Dachfläche und kann Bereiche festlegen, unter denen Funktionsbauteile unterhalb der Dachfläche oder Dachhaut angeordnet sind, die damit optisch von der Oberseite verdeckt werden.

Die zweitgenannte Aufgabe wird durch einen Kraftwagen mit einem Dachmodul mit den Merkmalen des Anspruchs 11 gelöst.

Wenn das an der Karosseriestruktur anbringbare Dachmodul aus einer Gruppe von zumindest zwei Dachmodulen auswählbar ist, die jeweils nach einem der Ansprüche 1 bis 10 gebildet sind, kann der Nutzer unter den in unterschiedlichen Konfigurationen angebotenen Dachmodulen das seinen Bedürfnissen entsprechende Dachmodul auswählen und es gegebenenfalls gegen ein anderes Dachmodul austauschen lassen.

Vorteilhafte Ausgestaltungen der Erfindung sind in den Unteransprüchen angegeben.

Zweckmäßigervveise kann das Dachmodul auch die Windschutzscheibe des Fahrzeugs enthalten. Die Windschutzscheibe bildet dann eine Einheit mit dem Dachbereich des Dachmoduls.

Die Dachbox kann am Dachmodul in Längsausrichtung mittig angeordnet sein. Dann ist es zweckmäßig, daß die zentrale Längsbasis der Y-Struktur eine Aufnahme für die Dachbox aufweist. Die Aufnahme ist damit optisch in die Y-Struktur integriert.

Ein besonderer Vorteil ergibt sich, wenn das Dachmodul eine Versteifungsstruktur enthält. Diese Versteifungsstruktur erhöht z. B. die Torsionsfestigkeit des Daches definiert, so daß das Dach und das Fahrzeug in seiner Gesamtheit leichter gebaut werden kann.

Besonders zweckmäßig ist es, wenn die Y-Struktur als Versteifungsstruktur gebildet ist. Dann kann der optische Nutzen mit dem Gewinn an Festigkeit des Daches kombiniert werden. Des weiteren bietet die Y-Struktur als Versteifungsstruktur die Möglichkeit der Anbringung weiterer Bauteile sowohl an der Oberseite des Dachmoduls wie auch an seiner Unterseite. Dabei gibt es unterschiedliche Anordnungsmöglichkeiten der Versteifungsstruktur, wobei es zweckmäßig ist, wenn die Y-Struktur bzw. die Versteifungsstruktur unterhalb einer Dachhaut des Dachmoduls vorgesehen ist, so daß die Oberseite glattflächig gebildet werden kann.

Die Y-Struktur bzw. die Versteifungsstruktur kann als Rahmenanordnung gebildet sein und von der Rahmenanordnung gebildete Rahmenöffnungen können von der Dachhaut bzw. der Windschutzscheibe verschlossen sein, die an die Rahmenanordnung angesetzt oder eingesetzt werden.

Die Y-Struktur ist nicht auf eine dem idealen Buchstaben entsprechende Form beschränkt, sondern kann weitgehend frei gewählt werden. So können die beiden Y-Schenkel auch gebogen sein und es kann auch eine hintere zweite Y-Struktur entgegengesetzt zu der vorderen Y-Struktur vorgesehen sein.

Das Dachmodul kann aus Glas, Kunststoff, insbesondere transparentem Kunststoff wie Polycarbonat, oder zumindest teilweise aus Schicht- und Preßstoffen hergestellt sein.

Nachfolgend wird die Erfindung anhand von Ausführungsbeispielen des Dachmoduls unter Bezugnahme auf die Zeichnung näher erläutert. Es zeigt:
- Fig. 1: in einer perspektivischen Ansicht einen Kraftwagen mit einem Dachmodul, das eine nicht transparente Dachfläche bildet;
- Fig. 2: in einer perspektivischen Ansicht einen Kraftwagen mit einem weite- ren Dachmodul, das transparente und nicht transparente Bereiche aufweist;
- Fig. 3: in einer perspektivischen Ansicht einen Kraftwagen mit einem Dachmodul, das an seiner Oberseite eine Halteeinrichtung zum An- bringen einer Dachbox aufweist;
- Fig. 4: in einer perspektivischen Ansicht einen Kraftwagen mit einem weite- ren Ausführungsbeispiel eines Dachmoduls, das an seiner Obersei- te eine fest angebrachte Dachbox aufweist;
- Fig. 5: in einer perspektivischen Ansicht einen Kraftwagen mit einem Dachmodul, das auch eine integrierte Windschutzscheibe enthält;
- Fig. 6: in einer perspektivischen Innenansicht einen Vorderabschnitt eines Dachmoduls mit integrierter Windschutzscheibe; und
- Fig. 7: in einer perspektivischen Draufsicht ein Dachmodul mit einer Dach- box, die mittels einer Lagereinrichtung am Dachmodul bewegbar ge- lagert und in einer hinteren herabgeschwenkten Beladestellung an- geordnet ist.

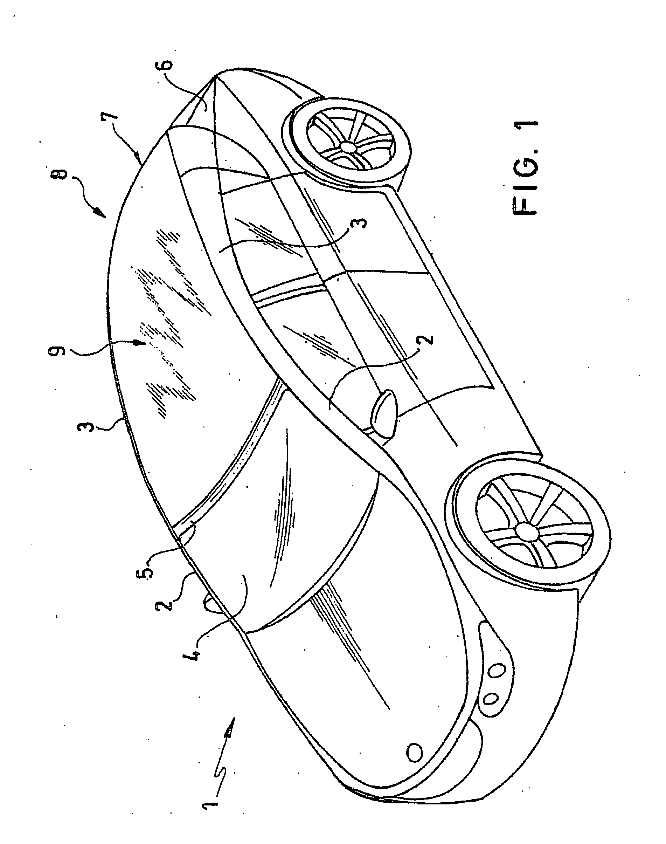

Ein Kraftwagen 1 (siehe Fig. 1), z. B. eine viertürige Limousine mit Fließ- oder Steilheck, enthält eine Karosserie mit A-Säulen 2, die in seitliche Dachlängsholme 3 übergehen. Eine Windschutzscheibe 4 ist an ihrem Oberrand von einem Scheibenrahmen oder Windlauf 5 begrenzt. Jeder Dachlängsholm 3 endet heckseitig an einer Karosseriestruktur, die z. B. in der Art einer C- oder D-Säule 6 gebildet ist. Ein hinterer Dachquerholm 7 verbindet die rückwärtigen Enden der beiden Dachlängsholme 3. Ein Dach 8 des Kraftwagens 1 enthält ein Dachmodul 9, das eine von den seitlichen Dachlängsholmen 3, dem Windlauf 5 und dem hinteren Dachquerholm 7 begrenzte Dachöffnung verschließt. Das Dachmodul 9 enthält oder bildet eine Dachhaut eines Volldaches, das in nicht transparenter Bauweise z. B. aus Stahl oder Kunststoff hergestellt ist. An der der Wageninnenseite zugewandfen Unterseite der Dachhaut bzw. des Dachmoduls 9 können ein Himmel und Ausrüstungsteile wie Haltegriffe oder Beleuchtungen vorgesehen sein (nicht dargestellt).

Das Dachmodul 9 ist an der Karosseriestruktur bzw. den Dachlängsholmen 3, dem Windlauf 5 und dem hinteren Dachquerholm 7 an jeweiligen Aufnahmeflächen oder Flanschen lösbar oder fest angebracht. Damit kann bei der Herstellung des Kraftwagens ein dem Kundenwunsch entsprechend konfiguriertes Fahrzeugdach durch Anbringen des ausgewählten Dachmoduls 9 erzeugt werden, wobei bevorzugt das Dachmodul 9 aus einer Gruppe von mehreren unterschiedlichen Dachmodulen, die die gleichen Befestigungsmaße aufweisen, auswählbar ist. Weitere Ausführungsbeispiele von geeigneten Dachmodulen werden nachfolgend erläutert. Wenn das Dachmodul an der Karosseriestruktur lösbar angebracht wird, kann es bedarfsweise nach Wunsch des Nutzers durch ein anderes Dachmodul ersetzt werden, das andere Eigenschaften aufweist.

Das in Fig. 1 dargestellte Dachmodul 9 kann auch eine transparente Dachhaut aufweisen, die z. B. aus Glas oder Polycarbonat oder einem anderen durchsichtigen Werkstoff hergestellt ist und ein als Panoramadach bezeichnetes Dach bereitstellt. Ein derartiges Panoramadach, das unbehinderte Sichtverhältnisse nach oben bietet, kann auch eine erhabene Form durch eine nach oben gerichtete Wölbung der Dachhaut aufweisen, wodurch ein kuppelartiges Raumgefühl im Wageninneren entsteht.

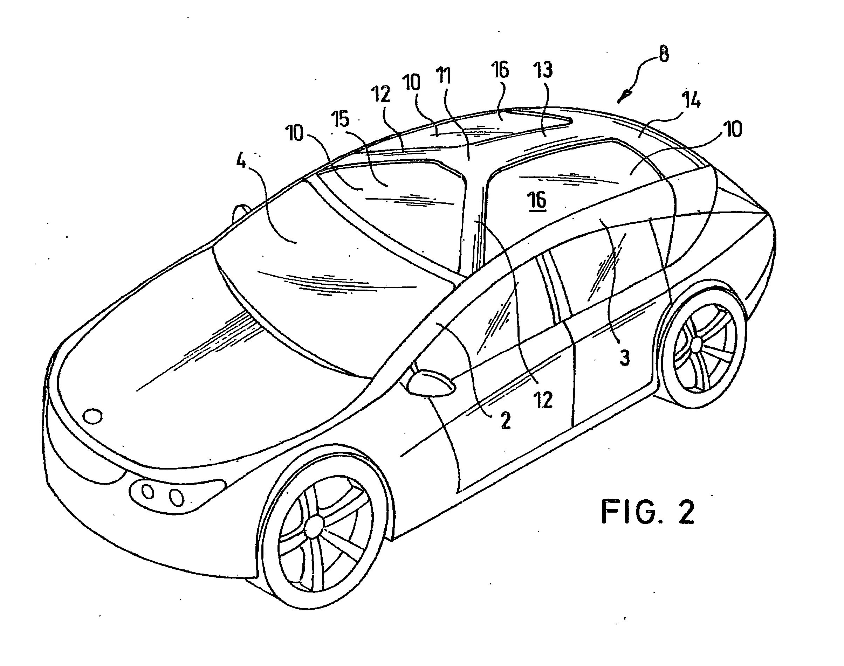

Das in Fig. 2 dargestellte Fahrzeugdach 8 enthält ein Dachmodul 9 mit transparenten Bereichen 10 und nicht transparenten Bereichen 11 der Dachhaut. Die nicht transparenten Bereiche bilden im wesentlichen eine Y-Struktur, wobei die freien Enden der beiden Y-Schenkel 12 dachvorderseitig an den A-Säulen 2 oder an den seitlichen Dachlängsholmen 3 insbesondere im Bereich der A-Säulen 2 enden und die mittige Längsbasis 13 der Y-Struktur heckseitig in einen Querstreifen 14 übergeht, der sich über die Breite der Dachhaut an ihrem Hinterende erstreckt. Damit ist ein z. B. annähernd trapezförmiger oder dreieckiger vorderer Durchsichtsbereich 15 des Dachmoduls 9 sowie zwei seitlich angeordnete Durchsichtsbereiche 16 geschaffen. Bei gebogenen Y-Schenkeln 12 kann der vordere Durchsichtsbereich 15 auch in etwa halbkreisförmig sein. Jedoch kann die Form der Y-Schenkel 12 variiert werden, so daß ein dementsprechend geformter vorderer Durchsichtsbereich 15 bereitgestellt wird, der in jedem Fall die Sicht des Fahrers bzw. Beifahrers nach oben hin verbessert.

Die nicht transparenten Bereiche 11 sind durch Folien oder durch Färbung oder Lackierung einer Dachhaut, die z. B. aus Glas oder einem transparenten Kunststoff hergestellt ist, oder durch anderweitige Abdeckungen gebildet.

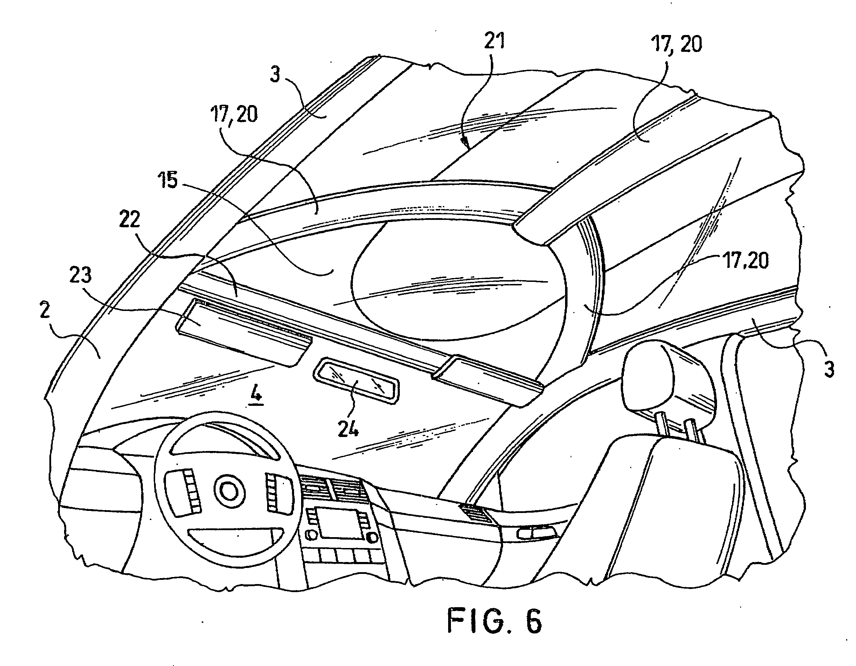

Die nicht transparenten Bereiche 11 können auch durch eine insbesondere versteifend wirkende Rahmenanordnung des Dachmoduls 9 gebildet sein. Ein solche Rahmenanordnung kann integral durch Materialverdickung oder durch Einbindung von Fremdmaterialien gebildet sein. Des weiteren kann eine eigenständige Rahmenanordnung 17 vorgesehen sein, die an der durchgehenden Dachhaut unterseitig angeordnet ist (siehe z. B. Fig. 6) oder in oder an die die durchsichtigen Dachhautteile angesetzt oder eingesetzt sind, um ein durchgehendes Dach zu bilden.

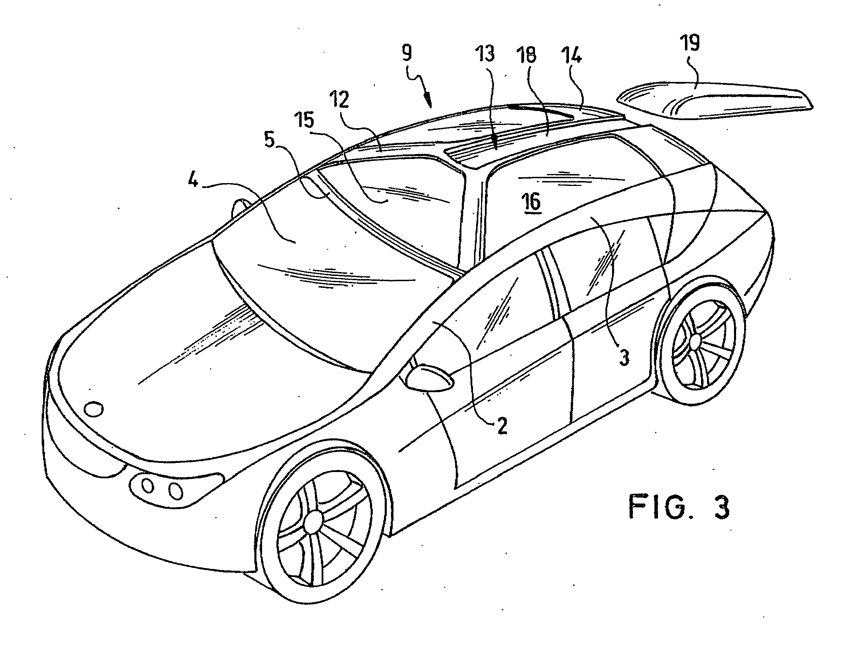

Fig. 3 zeigt eine Abwandlung des in Fig. 2 dargestellten Dachmoduls 9, wobei an der mittigen Längsbasis 13 der Y-Struktur eine längs gerichtete Aufnahme 18 für eine Dachbox 19 gebildet ist. Die Aufnahme 18 ist z. B. eine vertiefte Rinne, die sich bis zum Hinterrand des Daches erstreckt und in die die Dachbox 19 von hinten nach vorne einschiebbar ist. Die einen zusätzlichen Nutzraum bereitstellende Dachbox 19 ist an ihrer Unterseite von der z. B. schwalbenschwanzartig gebildeten Aufnahme 18 umgriffen und verschiebbar gehalten und durch nicht dargestellte Befestigungsmittel ist sie am Dachmodul 9 lösbar festzulegen. Die Dachbox 19 ist in Form und Farbe an das Dachmodul 9 bzw. die Y-Struktur 12, 13 angepaßt.

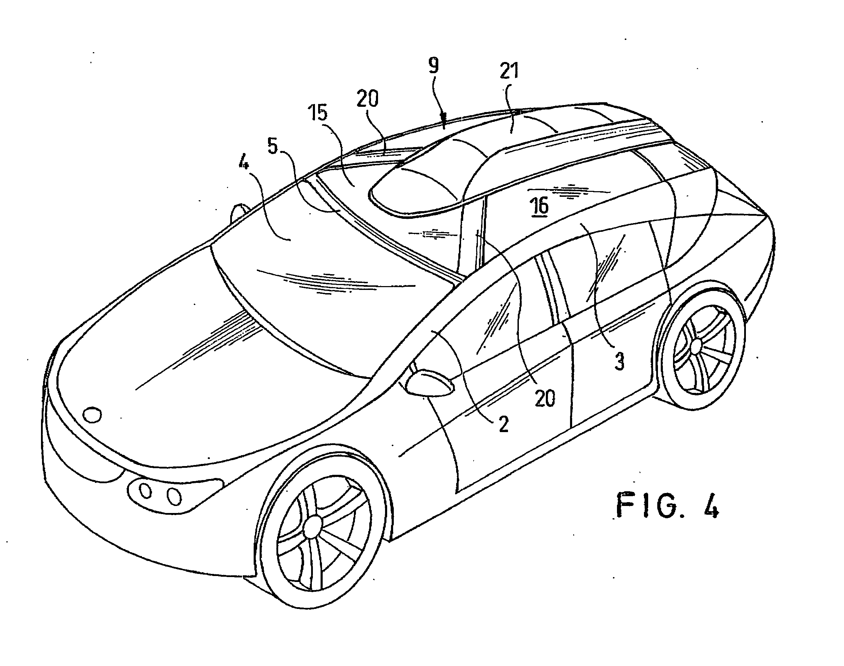

Das in Fig. 4 dargestellte Dachmodul 9 enthält einen Trägerrahmen 20 in der beschriebenen Y-Struktur, an dem eine Dachbox 21 fest angebracht ist. Durch eine stabile Ausbildung des Trägerrahmens 20 stellt er eine sichere Lagerung der Dachbox 21 bereit und verleiht dem Dach eine hohe Torsionssteifigkeit, so daß z. B. der Windlauf 5 eine geringere Tragfunktion übernehmen muß und daher mit reduziertem Querschnitt leichter gebildet werden kann. Durch den reduzierten Querschnitt des Windlaufs 5 wird die Durchsicht nach vorne verbessert.

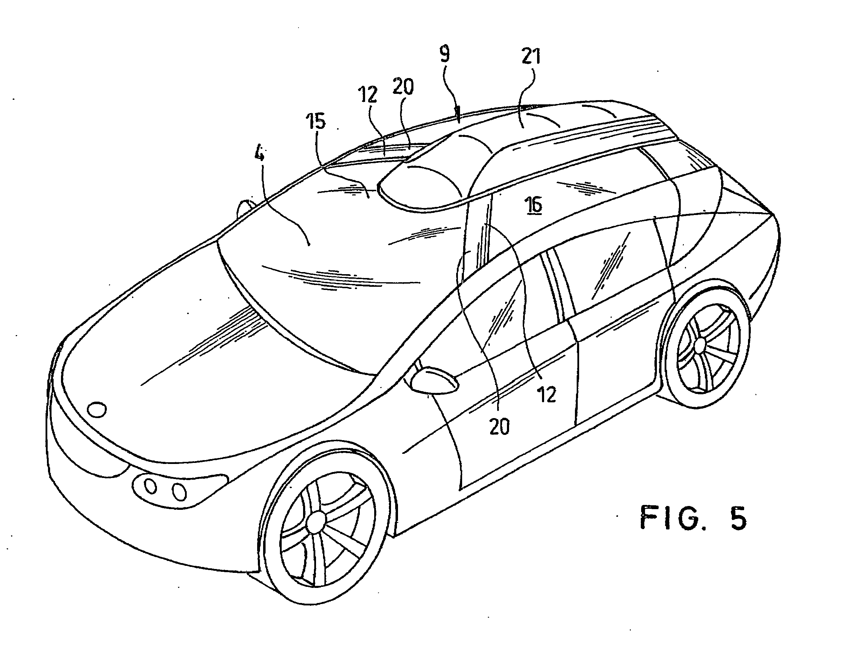

Das in Fig. 5 dargestellte Dachmodul 9 enthält ebenfalls einen Trägerrahmen 20 in Y-Struktur gemäß dem voranstehenden Ausführungsbeispiel, an dem eine Dachbox 21 befestigt ist. In das Dachmodul 9 ist zusätzlich die Windschutzscheibe 4 integriert, die nach oben hin unterbrechungslos in die Dachhaut des vorderen Durchsichtsbereichs 15 übergeht, die sich bis an die beiden Y-Schenkel 12 des Trägerrahmens 20 erstreckt. Damit entfällt der Windlauf 5 und die Sichtverhältnisse werden verbessert. An Stelle des Windlaufs 5 kann sich eine Querstrebe 22 oder Querleiste über die Innenseite der Windschutzscheibe 4 bzw. der Dachhaut des vorderen Durchsichtsbereichs 15 erstrecken (siehe Fig. 6), die z. B. seitlich an den Dachlängsholmen 3 bzw. den A-Säulen 2 befestigt ist oder an die Innenseite der Windschutzscheibe 4 bzw. der Dachhaut geklebt ist. Die Querstrebe 22 oder Querleiste kann Ausrüstungsteile wie z. B. Sonnenblenden 23 Oder einen Rückspiegel 24 lagern.

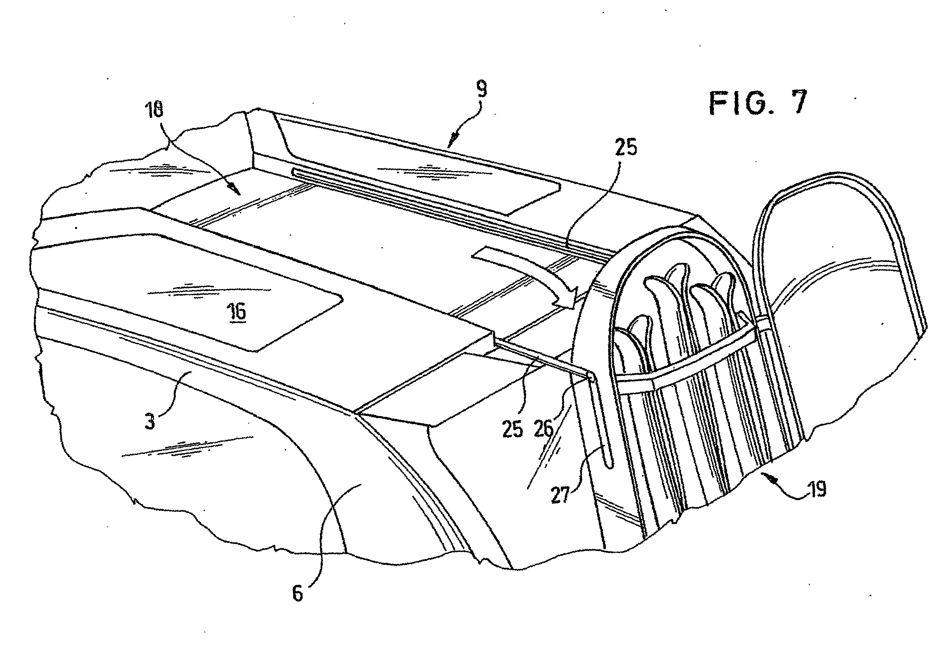

Das in Fig. 7 dargestellte Dachmodul 9 enthält eine verschiebbar aufzunehmende Dachbox 19 vergleichbar dem Ausführungsbeispiel der Fig. 3. Eine Lagereinrichtung für die Dachbox 19 enthält an der vertieften Aufnahme 18 beidseits jeweils eine Führungsstange 25, die längs verschiebbar und insbesondere teleskopierbar ist. Jede Führungsstange 25 ist am vorderen Seitenbereich der Dachbox 19 gelenkig gelagert, so daß die Dachbox 19, nachdem sie vom Dachmodul 9 nach hinten herausgezogen worden ist, um eine von den beiden Gelenken 26 gebildete Querschwenkachse herabschwenkbar ist (siehe in Fig. 7 dargestellte Stellung). Die beiden Gelenke 26 können in jeweiligen Führungen 27 oder Nuten an der Dachbox 19 verschiebbar aufgenommen sein, so daß die Dachbox 19 in ihrer herabgeschwenkten Stellung zum Beladen noch weiter abgesenkt werden kann.

### Bezugszeichenliste

- 1: Kraftwagen
- 2: A-Säule
- 3: Dachlängsholm
- 4: Windschutzscheibe
- 5: Windlauf
- 6: C- oder D-Säule
- 7: Dachquerholm
- 8: Dach
- 9: Dachmodul
- 10: transparenter Bereich
- 11: nicht transparenter Bereich
- 12: Y-Schenkel
- 13: Längsbasis
- 14: Querstreifen
- 15: vorderer Durchsichtsbereich
- 16: seitlicher Durchsichtsbereich
- 17: Rahmenanordnung
- 18: Aufnahme
- 19: Dachbox
- 20: Trägerrahmen
- 21: Dachbox
- 22: Querstrebe
- 23: Sonnenblende
- 24: Rückspiegel
- 25: Führungsstange
- 26: Gelenk
- 27: Führung

## Patentansprüche

1. Dachmodul eines Kraftwagens, das an der Karosserie des Kraftwagens festlegbar ist und einen Dachbereich bildet, wobei das Dachmodul (9) ein flächiges Volldach ist, das nichttransparent oder zumindest teilweise transparent ist, oder
das Dachmodul (9) ein Panoramadach ist, das
- nach oben erhaben ist und/oder
- zumindest teilweise transparent ist und/oder
- eine an seiner Oberseite fest angebrachte Dachbox (21) aufweist oder
- eine Lagereinrichtung (18, 25) zum lösbaren Festlegen einer Dachbox (19) an der Oberseite des Dachmoduls (9) aufweist,
**dadurch gekennzeichnet,**
**dass** es eine nicht transparente Y-Struktur (12, 13) enthält und die freien Enden der beiden Y-Schenkel (12) dachvorderseitig an den A-Säulen (2) oder an den seitlichen Dachlängsholmen (3) enden.

2. Dachmodul nach Anspruch 1,
**dadurch gekennzeichnet, dass** die freien Enden der beiden Y-Schenkel (12) dachvorderseitig an den seitlichen Dachlängsholmen (3) im Bereich der A-Säulen (2) enden.

3. Dachmodul nach Anspruch 1 oder 2,
**dadurch gekennzeichnet, dass** es eine Windschutzscheibe (4) enthält.

4. Dachmodul nach einem der Ansprüche 1 bis 3,
**dadurch gekennzeichnet, dass** die Dachbox (19, 21) am Dachmodul (9) in Längsausrichtung mittig angeordnet ist.

5. Dachmodul nach einem der Ansprüche 1 bis 4,
**dadurch gekennzeichnet, dass** die zentrale Längsbasis (13) der Y-Struktur eine Aufnahme (18) für die Dachbox (19) aufweist.

6. Dachmodul nach einem der Ansprüche 1 bis 5,
**dadurch gekennzeichnet, dass** das Dachmodul (9) eine Versteifungsstruktur (17, 20) enthält.

7. Dachmodul nach Anspruch 6,
**dadurch gekennzeichnet, dass** die Y-Struktur (12, 13) als Versteifungsstruktur (17, 20) gebildet ist.

8. Dachmodul nach einem der Ansprüche 1 bis 7,
**dadurch gekennzeichnet, dass** die Y-Struktur (12, 13) bzw. die Versteifungsstruktur (17, 20) unterhalb einer Dachhaut des Dachmoduls (9) vorgesehen ist.

9. Dachmodul nach einem der Ansprüche 1 bis 8,
**dadurch gekennzeichnet, dass** die Y-Struktur (12, 13) bzw. die Versteifungsstruktur (17, 20) als Rahmenanordnung gebildet ist und von der Rahmenanordnung gebildete Rahmenöffnungen von der Dachhaut (15, 16) bzw. der Windschutzscheibe (4) verschlossen sind.

10. Dachmodul nach einem der Ansprüche 1 bis 9,
**dadurch gekennzeichnet, dass** an einem Oberrand des Bereichs der Windschutzscheibe (4) des Dachmoduls (9) innenseitig am Dachmodul (9) bzw.
der Windschutzscheibe (4) oder der Dachhaut eine Querstrebe (22) angeordnet ist.

11. Kraftwagen mit einem Dachmodul,
**dadurch gekennzeichnet,**
**dass** das Dachmodul (9) gemäß einem der Ansprüche 1 bis 10 gebildet ist.

## Claims

1. Roof module of a motor vehicle, which can be fixed to the motor vehicle body and forms a roof region, whereon
the roof module (9) is an extensive solid roof which is not transparent or is at least partially transparent, or
the roof module (9) is a panorama roof which
- is convex and/or
- is at least partially transparent and/or
- has a roof box (21) fixedly attached to the upper side thereof, or
- a bearing device (18, 2b) for releasably fixing a roof box (19) Lo Lhe upper side of the roof module (9),
**characterized in that** said roof module contains a non-transparent Y structure (12, 13), and the free ends of the Lwo Y limbs (12) end on the front side of the roof at the A pillars (2) or at the lateral longitudinal roof members (3).

2. Roof module according to Claim 1, **characterized in that** the free ends of the two Y limbs (12) end on the front side of Lhe roof at the lateral longitudinal roof members (3) in the region of the A pillars (2).

3. Roof module according to Claim 1 or 2, **characterized in that** it contains a windscreen (4).

4. Roof module according to one of Claims 1 to 3, **characterized in that** the roof box (19, 21) is arranged centrally on the roof module (9) in a longitudinal orientation.

5. Roof module according to one of Claims 1 to 4, **characterized in that** the central longitudinal base (13) of the Y structure has a seating (18) for the roof box (19).

6. Roof module according to one of Claims 1 to 5, **characterized in that** the roof module (9) contains a stiffening structure (17, 20).

7. Roof module according to Claim 6, **characterized in that** the Y structure (12, 13) is formed as a stiffening structure (17, 20).

8. Roof module according to one of Claims 1 to 7, **characterized in that** the Y structure (12, 13) or Lhe stiffening structure (17, 20) is provided below a roof skin of the roof module (9).

9. Roof module according to one of Claims 1 to 8, **characterized in that** the Y structure (12, 13) or the stiffening structure (17, 20) is formed as a frame arrangement, and frame openings formed by the frame arrangement are closed by the roof skin (15, 16) or by the windscreen (4).

10. Roof module according to one of Claims 1 to 9, **characterized in that**, at an upper edge of the region of the windscreen (4) of the roof module (9), a transverse strut (22) is arranged on the inside of the roof module (9) or of the windscreen (4) or of the roof skin.

11. Motor vehicle with a roof module, **characterized in that** the roof module (9) is formed according to one of Claims 1 to 10.

## Revendications

1. Module de toit d'une automobile, qui peut être fixé sur la carrosserie de 11 automobile et qui forme une zone de toit,
le module de toit (9) étant un toit plein et étendu, qui n'est pas transparent ou qui est au moins en partie transparente, ou
le module de toit (9) étant un toit panoramique, qui
- est convexe et/ou
- qui est au moins en partie transparent et/ou
- qui présente une boite de toit (21) montée fixement sur son côté supérieur ou
- qui présente un dispositif de palier (18, 25) pour la fixation amovible d'une boîte de toit (19) sur le côté supérieur du module de toit (9),
**caractérisé en ce**
**qu'**il comprend une structure en Y non transparente (12, 13) et les extrémités libres des deux branches du Y (12) se terminent du côté avant du toit sur les colonnes A (2) ou sur les longerons de toit latéraux (3).

2. Module de toit selon la revendication 1, **caractérisé en ce que** les extrémités libres des deux branches du Y (12) se terminent du côté avant du toit au niveau des longerons de toit latéraux (3) dans la région des colonnes A (2).

3. Module de toit selon la revendication 1 ou 2, **caractérise en ce qu'**il contient un pare-brise (4) .

4. Module de toit selon l'une quelconque des revendications 1 à 3, **caractérisé en ce que** la boitte de toit (19, 21) est disposée centralement sur le module de toit (9) dans une orientation longitudinale.

5. Module de toit selon l'une quelconque des revendications 1 à 4,
**caractérisé en ce que** la base longitudinale centrale (13) de la structure en Y présente un logement (18) pour la boite de toit (19).

6. Module de toit selon l'une quelconque des revendications 1 à 5,
**caractérisé en ce que** le module de toit (9) continent une structure de renforcement (17, 20).

7. Module de toit selon la revendication 6, **caractérisé en ce que** la structure en Y (12, 13) est formée sous forme de structure de renforcement (17, 20).

8. Module de toit selon l'une quelconque des revendications 1 à 7,
**caractérisé en ce que** la structure en Y (12, 13) ou la structure de renforcement (17, 20) sont prévues en dessous d'un habillage de toit du module de toit (9).

9. Module de toit selon l'une quelconque des revendications 1 à 8,
**caractérisé en ce que** la structure en Y (12, 13) ou la structure de renforcement (17, 20) sont formées en tant qu'agencement de cadre et des ouvertures du cadre formées par l'agencement de cadre sont fermées par l'habillage de toit (15, 16) ou par le pare-brise (4).

10. Module de toit selon l'une quelconque des revendications 1 à 9,
**caractérisé en ce qu'**une traverse (22) est disposée sur un bord supérieur de la région du pare-brise (4) du module de toit (9) du côté intérieur sur le module de toit (9) ou le pare-brise (4) ou l'habillage de toit.

11. Automobile comprenant un module de toit, **caractérisée en ce que**
le module de toit (9) est formé selon l'une quelconque des revendication 1 à 10.
